# FASCICULE DE BREVET EUROPEEN

(11) **EP 2 027 133 B1**
(45) Date de publication et mention de la délivrance du brevet: **29.12.2010**
(21) Numéro de dépôt: 07729275.3
(22) Date de dépôt: 18.05.2007
(51) Int. Cl.: C07F 7/18

(54) **NOUVEAUX COMPOSES SILANES PORTEURS D'UNE FONCTION HYDRAZONE OU DIAZO POUR FONCTIONNALISER DES SUPPORTS SOLIDES ET IMMOBILISER SUR CES SUPPORTS DES MOLECULES BIOLOGIQUES**
NEUE SILANVERBINDUNGEN MIT HYDRAZON- ODER DIAZOFUNKTION ZUR FUNKTIONALISIERUNG FESTER TRÄGER UND ZUR IMMOBILISIERUNG BIOLOGISCHER MOLEKÜLE DARAUF
NOVEL SILANE COMPOUNDS HAVING A HYDRAZONE OR DIAZO FUNCTION FOR FUNCTIONALISING SOLID SUPPORTS AND IMMOBILISING BIOLOGICAL MOLECULES THEREON

(30) Priorité: 19.05.2006 FR 0651842
(43) Date de publication de la demande: 25.02.2009
(73) Titulaire: Commissariat à l'Énergie Atomique et aux Énergies Alternatives, 75015 Paris (FR)
(72) Inventeur: MARTIN, Franck, F-34070 Montpellier (FR); HOANG, Antoine, F-38000 Grenoble (FR)
(74) Mandataire: Ilgart, Jean-Christophe
(86) Numéro de dépôt international: PCT/EP2007/054830
(87) Numéro de publication internationale: WO 2007/135096

(56) Documents cités:
- BARNES-SEEMAN D., BUM PARK S., KOEHLER A. N., SCHREIBER S. L: "Expanding the Functional Group Compatibility of Small-Molecule Microarrays: Discovery of Novel Calmodulin Ligands" ANGEWANDTE CHEMIE INTERNATIONAL EDITION, vol. 42, 2003, pages 2376-2379, XP002414761

## Description

### DOMAINE TECHNIQUE

La présente invention a trait à de nouveaux composés silanes porteurs d'une fonction hydrazone ou diazo utilisables pour fonctionnaliser des supports solides, à des supports fonctionnalisés par lesdits composés silanes et à leurs utilisations pour l'immobilisation de molécules biologiques, en particulier d'acides nucléiques.

L'analyse de la structure, de l'organisation et de la séquence d'une molécule d'acide nucléique est d'une importance majeure dans la prévision, le diagnostic et le traitement de maladie, dans les médecines légales, dans l'épidémiologie et la santé publique et dans l'élucidation des facteurs qui commandent l'expression et le développement des gènes.

Des supports porteurs de molécules biologiques immobilisées, telles que des acides nucléiques, sont avantageusement utilisés pour la détection et la reconnaissance d'espèces biologiques, mais également d'autres applications, telles que la séparation et la purification de molécules biologiques.

Pour ce faire, il est essentiel de disposer de supports solides fonctionnalisés présentant les caractéristiques suivantes :
- permettre l'immobilisation reproductible des molécules biologiques d'intérêt ;
- permettre immobilisation des molécules biologiques d'intérêt de façon sensible, la sensibilité d'un support solide fonctionnalisé dépendant du taux d'immobilisation et de la méthode de détection d'un signal mais aussi du niveau du bruit fond ;
- être réutilisables.

Un exemple d'un tel support est fourni dans le document : Angewandte Chemie International Edition, vol.42, 2003, pages 2376-2379, lequel support résulte d'un procédé comprenant les étapes suivantes:
- une étape de couplage d'un support déjà fonctionnalisé par un groupe y-aminopropylsilane avec un composé toluènesulfonylhydrazone ;
- une étape d'élimination du groupe tosylate par voie basique de sorte à libérer une fonction azo -N₂.

L'immobilisation de molécules biologiques d'intérêt sur des supports solides s'effectue généralement en deux étapes :
- une première étape de fonctionnalisation des supports qui consiste en une modification chimique de leur surface par greffage d'agents de couplage qui vont assurer la fixation des molécules biologiques sur le support ;
- une deuxième étape d'immobilisation consistant à établir une interaction entre les molécules biologiques et les agents de couplage greffés sur le support, l'interaction pouvant consister en la formation d'une liaison covalente entre la molécule biologique et l'agent de couplage ou de liaisons plus faible (telles que des interactions électrostatiques, des liaisons datives).

Les agents de couplage se greffent à la surface des supports par réaction avec des fonctions - OH ou hydrure du support et des fonctions réactives de l'agent, pour former de fortes interactions ioniques ou covalentes entre l'agent de couplage et le support et s'organisent à la surface du support généralement sous forme d'une monocouche dense et organisée à la surface, par exemple, par formation de liaisons du type Van der Waals entre les molécules d'agents de couplage greffées.

Généralement, pour fixer des molécules biologiques du type acide nucléique, il est nécessaire de modifier celles-ci préalablement par introduction d'un groupe réactif susceptible de réagir avec soit directement le support, soit l'agent de couplage. Toutefois, l'utilisation de telles molécules modifiées augmente considérablement le coût de mise en oeuvre des procédés d'immobilisation de ces molécules.

Les inventeurs se sont ainsi fixé comme but de proposer de nouveaux composés silanes aptes à être greffés à la surface d'un support solide et comprenant des groupes permettant l'immobilisation directe de molécules biologiques par la formation de liaisons covalentes sans nécessiter de modification préalable desdites molécules.

### EXPOSE DE L'INVENTION

Ainsi, l'invention a trait, selon un premier objet, à un composé silane répondant à la formule (I) suivante : 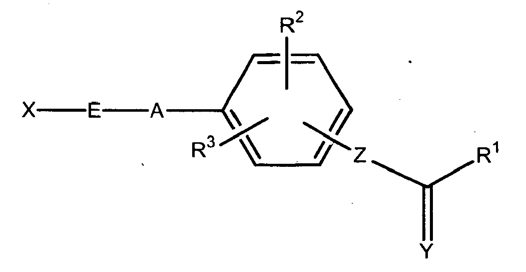 dans laquelle :
- R¹ représente un atome d'hydrogène, un groupe alkyle ou un groupe aryle;
- R² et R³ représentent, indépendamment l'un de l'autre, H, NO₂, Cl, Br, F, I, OR, SR, NR₂, R, NHCOR, CONHR, COOR avec R représentant un groupe alkyle ou aryle ;
- Z représente une liaison simple
- X représente un groupe silylé apte à créer une liaison covalente après réaction avec les fonctions hydroxyle ou hydrure d'un support ;
- E représente un groupe espaceur organique ;
- A représente ,-O-, ;
- Y représente un groupe -N₂, -N-NH₂.

Selon l'invention, le groupe E est un groupe espaceur organique, sa fonction essentielle étant de conférer des propriétés particulières au film résultant du greffage des composés silanes à la surface d'un support.

le groupe E est un groupe alkylène, c'est-à-dire un enchaînement du type -CH₂-, comprenant, de 8 à 24 atomes de carbone. Ce type de groupe confère aux composés silanes, une fois greffés sur un support, une capacité à interagir entre eux, par création d'interactions interchaînes et ainsi contribue à l'obtention de monocouches organisées.

Selon l'invention, X représente un groupe silylé permettant la fixation covalente: du composé silane sur les fonctions hydroxyle ou hydrure d'un support, lequel support peut être, par exemple, un support solide en silicium, en ITO (oxyde d'indium et d'étain) ou en titane.

Ce groupe X représente un groupe trihalogénosilane (tel qu'un groupe trifluorosilane, un groupe trichlorosilane) ; un groupe trihydrogénosilane ; un groupe trialcoxysilane -Si(OR⁴)₃ avec R⁴ représentant un groupe alkyle saturé en C₁ à C₆, linéaire ou ramifié, un groupe phényle (tel qu'un groupe triméthoxysilane, un groupe triéthoxysilane, un groupe triisopropoxysilane) ; un groupe triaminoalcoxyamine -Si (NR⁵R⁶)₃, avec les R⁵ et R⁶ représentant indépendamment un groupe alkyle saturé en C₁ à C₆, linéaire ou ramifié, un groupe phényle ; ou un groupe organométallique (tel qu'un groupe organomagnésien, un groupe organolithien) et

Z représente une liaison simple, et la fonction hydrazone ou diazo peut se conjuguer directement avec le cycle aromatique adjacent, ou Z peut être un groupe organique comprenant au moins une double liaison permettant une conjugaison entre le cycle aromatique et la fonction hydrazone ou diazo. Par conjugaison, on entend la délocalisation électronique du cycle aromatique le long de la chaîne carbonée du groupe organique. Ce groupe organique peut être un groupe de formule : 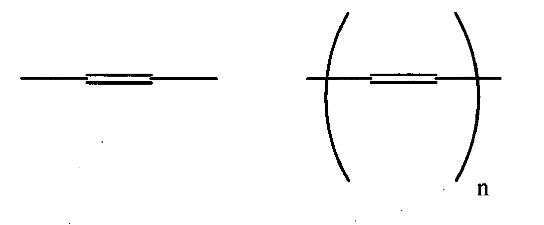 n étant un entier correspondant au nombre de répétition du motif placé entre parenthèse, n pouvant être égale à 1 ou 2.

R¹ peut être un groupe alkyle comprenant, par exemple, de 1 à 10 atomes de carbone, tel qu'un groupe méthyle ou un groupe aryle comprenant, par exemple, de 6 à 18 atomes de carbone, tel qu'un groupe phényle.

Une première famille de composés conforme à l'invention est une famille pour laquelle Y est un groupe de formule -N-NH₂, auquel cas ces composés répondent à la formule (II) suivants :

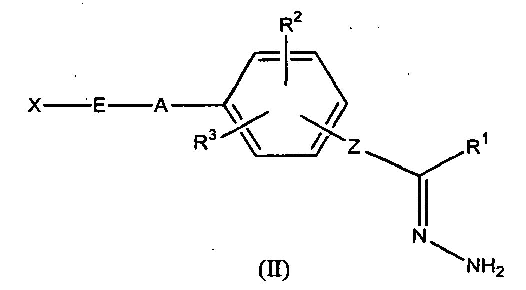

On peut citer, par exemple le composé de formule (III) suivants :

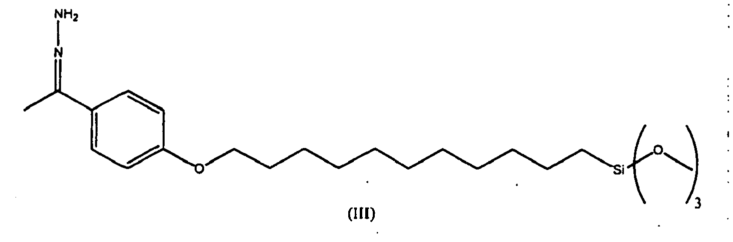

Une seconde famille de composés conforme à l'invention est une famille pour laquelle Y est un groupe de formule -N₂, auquel cas ces composés répondent à la formule (IV) suivants :

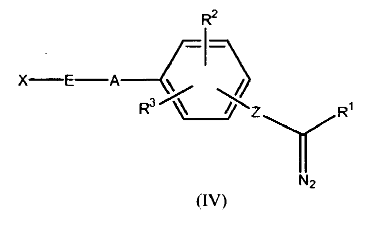

On peut citer, par exemple le composé de formule (V) suivants :

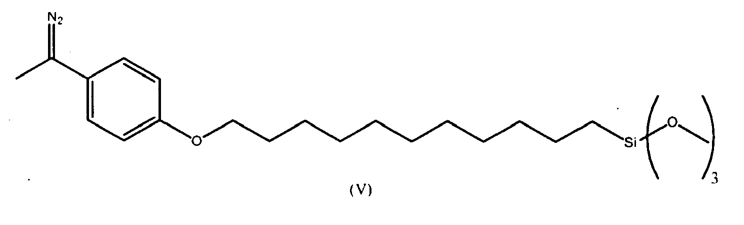

Les composés de l'invention peuvent être préparés par des méthodes classiques de synthèse accessibles à un technicien spécialisé en synthèse organique.

A titre d'exemple, pour obtenir des composés pour lesquels E est un groupe alkylène, A est -O- et X est un groupe -Si(OR⁴)₃, la préparation peut s'envisager en trois étapes selon le schéma réactionnel suivant.
1) Réaction d'un componé carbonylé phénolique avec un composé précurseur halogéné vinylique 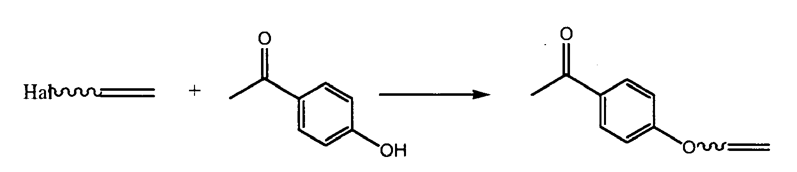
   Cette réaction consiste en une substitution nucléophile de l'atome d'halogène Hal.
   La liaison ondulée entre Hal et = représente un groupe hydrocarboné reliant Hal et =, tel qu'un groupe alkylène.
2) Les composés obtenus à l'issue de l'étape 1 sont ensuite soumis à une réaction de formation de la fonction hydrazone par réaction avec une solution d'hydrazine selon le schéma réactionnel suivant : 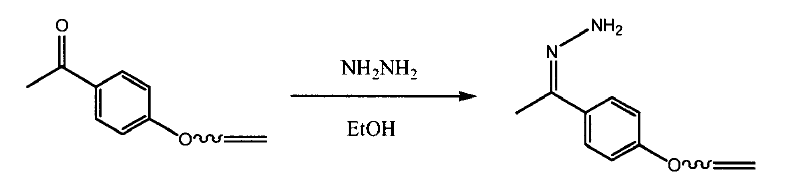
3) Les composés obtenus à l'issue de l'étape 2 sont ensuite soumis à une réaction d'hydrosilylation avec un réactif du type HSi(OR⁴)₃ en présence d'un catalyseur de Karstedt Pt[Si(CH₃)₂HC=CH₂]₂O selon le schéma réactionnel suivant :

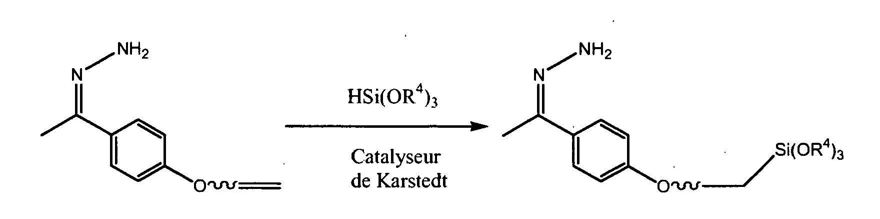

Enfin, la fonction hydrazone obtenue ci-dessus peut être transformée en une fonction diazo par une réaction d'oxydation, par exemple avec de l'oxyde de manganèse MnO₂.

L'homme du métier adaptera ces schémas réactionnels en fonction des composés silanes qu'il souhaite obtenir.

Comme mentionné précédemment, les composés silanes de l'invention sont susceptibles de se greffer à la surface d'un support, en raison de la présence du groupe X apte à réagir avec des fonctions hydroxyles ou hydrures (présentes sur le support) pour former des liaisons covalentes.

Ainsi, l'invention a trait selon un second objet, à un procédé de fonctionnalisation d'un support solide comportant en surface des fonctions hydroxyle ou hydrure, comprenant une étape de mise en contact d'une solution comprenant au moins un composé silane tel que défini ci-dessus avec ledit support.

Ce procédé peut comprendre préalablement un étape de traitement de la surface du support afin de créer sur ladite surface les fonctions hydroxyles ou hydrures nécessaires au greffage.

Ainsi, pour un support en silicium 1,0,0 (par exemple, du type wafer), il est préférable, avant fonctionnalisation, de traiter celui-ci en le mettant en contact avec une solution de soude afin de générer des fonctions silanols.

Les supports pouvant être fonctionnalisés selon le procédé de l'invention peuvent être des supports organiques (par exemple en matériaux plastiques), des supports inorganiques, par exemple des supports en oxyde métallique (par exemple, silice et ses dérivés comme le verre, le quartz, oxyde d'indium et d'étain...), des supports métalliques (tels que des supports en titane) ou des supports en silicium, l'essentiel étant que ces supports soient susceptibles (éventuellement avec l'étape de traitement préalable mentionnée ci-dessus) de présenter des fonctions hydroxyles ou hydrures pour le greffage des composés silanes de l'invention.

L'invention a également pour objet le support solide fonctionnalisé susceptible d'être obtenu par le procédé de l'invention.

De part la nature du groupe Y, les composés silanes greffés ont la capacité d'interagir avec des molécules biologiques pour les immobiliser.

La présente invention a donc également pour objet un procédé d'immobilisation de molécules biologiques sur support solide fonctionnalisé comprenant les étapes suivantes :
a) une étape de mise en oeuvre du procédé de fonctionnalisation du support tel que défini ci-dessus ;
b) une étape de mise en contact du support obtenu à l'étape a) avec une solution comprenant la (les) molécule(s) biologique(s) à immobiliser.

Les molécules à immobiliser peuvent être des oligonucléotides, des acides nucléiques, des polypeptides (protéines, enzymes), des lipides, des carbohydrates ou des hormones, notamment des molécules comprenant des groupes phosphates susceptibles de réagir avec une fonction diazo pour former une liaison covalente.

Au sens de la présente invention et dans ce qui suit, on entend par « acides nucléiques » aussi bien des oligonucléotides que des ADN ou des ARN.

L'invention a également pour objet les supports solides obtenus en mettant en oeuvre le procédé d'immobilisation conforme à l'invention, c'est-à-dire les supports solides sur lesquels sont immobilisés par fixation covalente les molécules biologiques d'intérêt.

Ces supports solides peuvent ainsi être utilisés comme outils d'analyse (par exemple, pour un diagnostic, un séquençage) ou comme outils de synthèse pour réaliser par exemple des revêtements.

Les supports trouvent donc des applications dans de nombreux domaines, tels que la synthèse sur supports solides, la séparation et la purification de molécules (électrophorèse et chromatographie), les biocapteurs.

L'utilisation de supports solides fonctionnalisés selon la présente invention permet d'immobiliser différents types de molécules biologiques et donc de préparer différents types de puces comme des puces à acides nucléiques telles que des puces à ADN, des puces à polypeptides telles que des puces à protéines.

L'utilisation de supports solides modifiés selon la présente invention est particulièrement avantageuse pour la préparation de puces à ADN, à savoir de supports sur lesquels sont fixés, de façon covalente, des oligo- ou polynucléotides de séquences connues. De telles puces à ADN permettent, par hybridation des oligo- ou polynucléotides immobilisés sur le support avec des acides nucléiques ou des oligonucléotides cibles, de déterminer la séquence de ces molécules cibles et de suivre l'expression des gènes. On précise que par puce à ADN, on entend un support solide de dimension réduite où sont fixés une multitude de sondes de capture à des positions prédéterminées.

La présente invention a donc pour objet également une puce à acides nucléiques ou à polypeptides, obtenues par le procédé d'immobilisation de l'invention mentionné ci-dessus.

L'invention va maintenant être décrite en référence aux exemples suivants donnés à titre illustratif et non limitatif.

### EXPOSE DE MODES DE REALISATION PARTICULIERS

### EXEMPLE 1

Cet exemple illustre la préparation d'un composé silane conforme à l'invention : le 11-(p-phénylméthylhydrazone) undécyltriméthoxysilane selon le schéma réactionnel suivant :

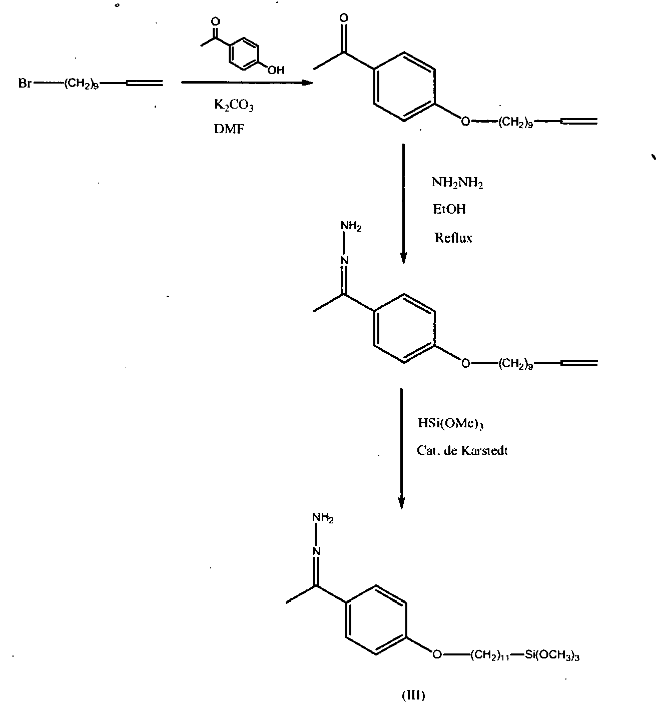

La fonction acétophénone est incorporée par une réaction de type Williamson entre le 11 - bromoundécène et le 4-hydroxyacétophénone. Le groupement hydrazone est synthétisé par réaction dans de l'hydrazine à chaud. L'incorporation de la partie silylée est obtenue après une réaction d'hydrosilylation en présence de catalyseur de Karstedt.

### a) Etape 1 : Synthèse du 11-(p-acétophénone)undéc-1-ène

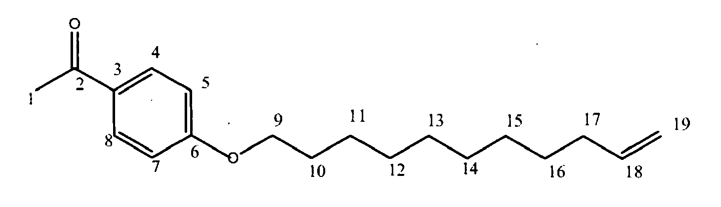

A une solution de 4-hydroxyacétophénone (8,79g; 63 mmol; 1 éq) dissous dans 150 mL de DMF, sont additionnés du 11-bromoundécène (95%) (15,54g; 14,5 mL; 63 mmol) et du carbonate de potassium (8,74g; 63 mmol; 1 éq). La réaction s'effectue à 50°C durant 16 heures. Après évaporation du DMF et reprise à l'éther éthylique, le mélange réactionnel est lavé successivement avec de l'eau permutée (à trois reprises) et avec une solution saturée de chlorure de sodium, séché sur du sulfate de magnésium anhydre puis concentré. Le résidu est purifié par chromatographie sur colonne de gel de silice (cyclohexane → cyclohexane/acétate d'éthyle (75/25)) pour donner un solide blanc.

Les caractéristiques du produit obtenu sont les suivantes :
Masse obtenue : 14,46 g
Rendement : 79%
Point de fusion : 35-40°C
**RMN ¹H (200 MHz; CDCl₃)** : 1,31 (12H; m; H¹¹⁻¹⁶⁾ ; 1,80 (2H; m; H¹⁰); 2,04 (2H; m; H¹⁷); 2,56 (3H; s; H¹) ; 4,02 (2H; t; H⁹ ; ³J_{H-H} = 6, 5 Hz) ; 4, 97 (2H; m; H¹⁹) ; 5,82 (1H; m; H¹⁸) ; 6,92 (2H; d; H^{5+7 **3**}J_{H-H} = 9 Hz) ; 7,93 (2H; d; H^{4+8 3}J_{H-H} = 8,8 Hz)
**RMN ¹³C (200 MHz; CDCl₃)** : 26,38; 26,77 (H¹) ; 29,33; 29,51 (2C) ; 29,75; 29,82; 29,91; 34,23; 68,67 (C⁹) ; 114, 55 (C⁵⁺⁹⁺¹⁹ ) ; 130, 5 (C³) ; 131,01 (C⁴⁺⁸); 139,63 (C¹⁸); 163,55 (C⁶) ; 197,29 (C²) .

### b) Etape 2 Synthèse du 11-(p-phénylméthylhydrazone) undéc-1-ène

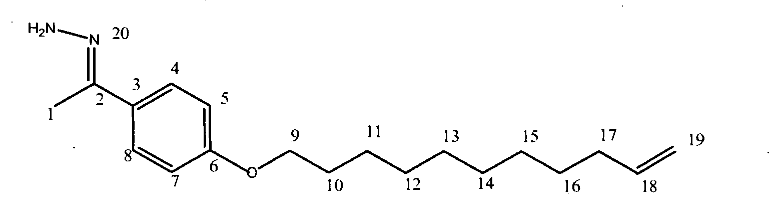

A une solution de 4-(11-undéc-1-ène)acétophénone (14,46g; 69 mmol) dissous dans 200 mL d'éthanol, est additionné de l'hydrazine monohydrate (20,34g; 20,2 mL; 408 mmol; 8,1 éq.). La réaction s'effectue à reflux durant 12 heures puis la solution est refroidie à -20°C. Le précipité formé est filtré pour donner un solide blanc.

Les caractéristiques du produit obtenu sont les suivantes :
Masse obtenue : 14,54 g
Rendement : 96 %
**RMN ¹H (200 MHz; CDCl₃)** : 1, 30 (12H; m; H¹¹⁻¹⁶); 1,76 (2H; m; H¹⁰) ; 2,04 (2H; m; H¹⁷) ; 2,12 (3H; s; H¹) 3,96 (2H; t; H⁹ ; ³J_{H-H} = 6,6 Hz); 4,97 (2H; m; H¹⁹); 5,24 (1H; s; H²⁰); 5,82 (1H; m; H¹⁸); 6,87 (2H; d; H⁵⁺⁷; ³J_{H-H} = 9 Hz); 7, 57 (2H; d; H⁴⁺⁸; ³J_{H-H} = 9 Hz)
**RMN ¹³C (200 MHz; CDCl₃)** _{:} 12,17 (H¹) ; 26,44; 29,34; 29,54; 29,66; 29,80; 29,84; 29,93; 34,23; 68,42 (C⁹); 114,62 (C⁵⁺⁷⁺¹⁹); 127,19 (C³) ; 132,23 (C⁴⁺⁸); 139,63 (C¹⁸); 148,21 (C²); 159,67 (C⁶)
**m/z (NBA)** : 303 [M+H]⁺

### c) Etape 3 : Synthèse du 11-(p-phénylméthylhydrazone) undécyltriméthoxysilane (III)

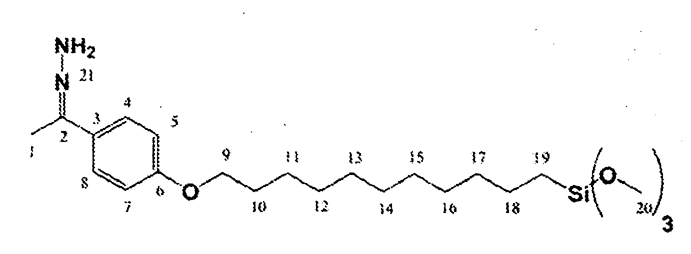

Le 11 -(p-phénylméthylhydrazone)undéc-1-ène (4g; 13 mmol) est mélangé avec du triméthoxysilane (90%) (2;62g; 2,7mL; 19 mmol; 1,5 éq.). Le catalyseur de Karstedt (0,31g; 0,03 mmol; 0,0025 éq.) est additionné très lentement. La réaction se déroule à température ambiante durant 16 heures. Après évaporation du triméthoxysilane en excès, le brut réactionnel est solubilisé dans du pentane anhydre et refroidie à -20°C. L'ensemble est filtré pour donner un solide jaune.

Les caractéristiques du produit obtenu sont les suivantes :
Masse obtenue : 2,6 g
Rendement : 46%
**RMN ¹H (200 MHz; CDCl₃)** : 0, 66 (2H, m, H¹⁹); 1,28 (12H; m; H¹¹⁻¹⁸); 1,78 (2H; m; H¹⁰) ; 2,32 (2H; m; H¹) ; 3,57 (9H; s; H²⁰); 3,99 (2H; t; H⁹ ; **³**J_{H-H} = 6,5 Hz); 6,92 (2H; d; H⁵⁺⁷; 3 J_{H-H} = 9 Hz); 7 , 8 6 (2H; d; H^{4+8 3}J_{H-H} = 9 Hz)
**RMN ¹³C (200 MHz; CDCl₃)**: 9,55 (H¹⁹); 15,20 (H¹); 23,02; 26,46; 29,68 (2C); 29,83; 29,94; 29,99; 30, 02; 33,58; 50, 93 (3C, C²⁰) ; 68,49 (C⁹) ; 114,58 (_{C}⁵⁺⁷); 128, 45 (C⁴⁺⁸); 131,51 (C³) ; 158,27 (C²) ; 160, 82 (C⁶)
**m/z (NBA):** 425 [M + H]⁺

### d) Silanisation d'un support en silicium par le composé(III)

L'hydroxylation du substrat en silicium recouvert d'une couche d'oxyde thermique de 5000 Å est réalisée dans une solution de soude 3,5M pendant 2 heures sous agitation. Le support est ensuite rincé successivement avec de l'eau désionisée et de l'éthanol sous ultrasons (4 minutes chacun).

Une solution silanisante de concentration 10⁻²M dans du trichloroéthylène anhydre est utilisée, et la réaction de silanisation est effectuée à une température contrôlée de 2°C pendant 24h. Le support est ensuite rincé successivement avec du dichlorométhane, de l'éthanol et du chloroforme sous ultrasons (4 minutes chacun).

La fonction diazo est obtenue lors d'une réaction post-silanisation du support modifié avec une solution de MnO₂ activé dissous dans du diméthylformamide durant 30 minutes. Le support est ensuite rincé avec du diméthylformamide sous ultrasons (4 minutes chacun). 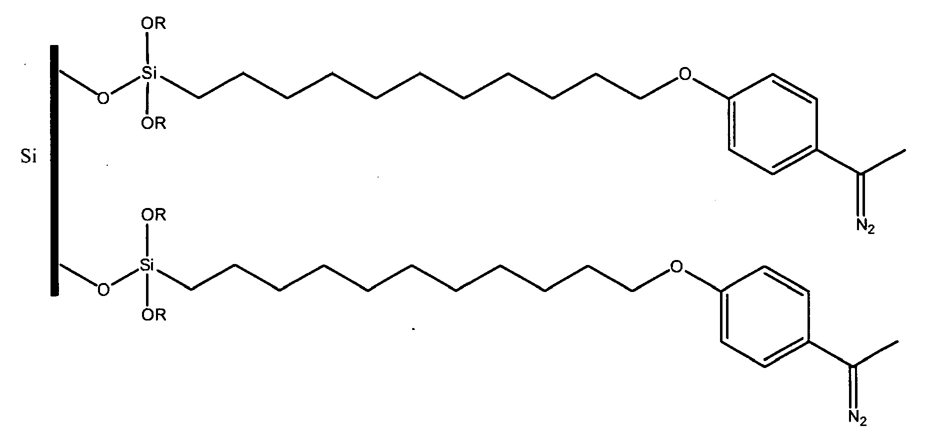 R représentant CH₃.

### EXEMPLE 2

Cet exemple illustre l'immobilisation d'un oligonucléotide sur le substrat modifié selon l'exemple 1 ci-dessus ainsi que l'hybridation de cet oligonucléotide avec une cible complémentaire.

### a) Immobilisation de l'oligonucléotide sur le substrat modifié

Après activation du support solide par oxydation au Mn02, 2 pavés de 3 lignes, chacune comportant 3 plots d'acides nucléiques sont formés à partir des dépôts réalisés de façon manuelle à l'aide d'une micropipette, avec un volume déposé de 0,2µL pour chaque plot.

Le pavé supérieur correspond au PNA et l'inférieur à l'ODN (oligonucléotide) de même séquence en bases nucléiques (5'-GAT AAA CCC ACT CTA-3'), et de même concentration de 10µM dans le tampon citrate à 0,3 M avec un pH 9. La différence entre le PNA et l'ODN réside dans le fait que le PNA correspond à un enchaînement d'acides nucléiques, tel que défini ci-dessus, relié par un squelette peptidique tandis que l'ODN correspond au même enchaînement d'acides nucléiques mais relié par un squelette phosphodiester.

### b) Traitement post-immobilisation

Après dépôt, le support solide est placé dans une chambre humide fermée hermétiquement et laissée pendant environ 16 heures. Il est ensuite rincé à l'eau, puis au détergeant SDS (sulfate dodécyl de sodium) à 0,2% puis de nouveau à l'eau, avec une durée de 10 minutes pour chaque étape de lavage.

### c) Hybridation

Ensuite, la révélation des plots d'acides nucléiques déposés sur le support solide est réalisée par l'étape d'hybridation en surface durant une heure à 40°C, avec une solution d'ADN de séquence complémentaire (5'-TAG AGT GGG TTT ATC-3') portant le groupe fluorophore CY3 dilué à 20nM dans un tampon d'hybridation commercial (Hyb buffer solution Sigma Aldrich réf: H7140) à base de citrate de sodium. Le support solide est ensuite rincé au citrate de sodium à 0,2X (X représentant pour le citrate de sodium 15.10⁻³ mol . L⁻¹) durant 5 minutes.

### d) Lecture et résultats

Les signaux de fluorescence sont obtenus sur un scanner vendu sous la dénomination GenePix® par la société AXON.

Seuls les plots du pavé inférieur émettent une fluorescence, ce qui atteste de la spécificité de la réaction entre les fonctions phosphates du squelette phosphodiester de l'oligonucléotide ODN et de la fonction aryldiazométhane de surface. Les plots du pavé supérieur n'émettent pas de fluorescence, du fait que les PNA ne se sont pas immobilisés à la surface du substrat, les groupements peptidiques de leur squelette ne pouvant réagir avec les fonctions aryldiazométhane de surface. Il a été constaté également une bonne homogénéité des résultats de fluorescence.

## Revendications

1. Composé silane répondant à l'une des formules suivantes : 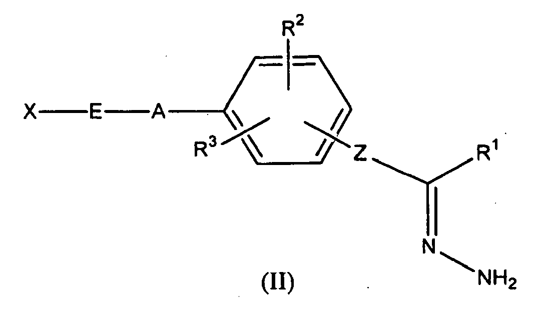 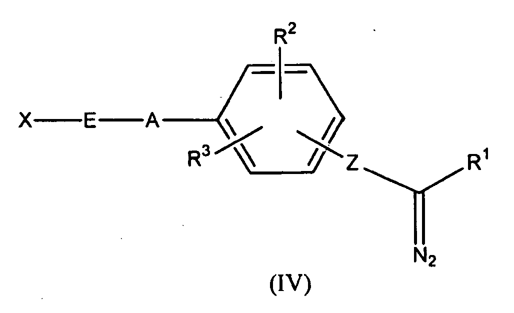 dans lesquelles :
- R¹ représente un atome d'hydrogène, un groupe alkyle ou un groupe aryle ;
- R² et R³ représentent, indépendamment l'un de l'autre, H, NO₂, Cl, Br, F, I, OR, SR, NR₂, R, NHCOR, CONHR, COOR avec R représentant un groupe alkyle ou aryle ;
- Z représente une liaison simple;
- X représente un groupe silylé apte à créer une liaison covalente après réaction avec les fonctions hydroxyle ou hydrure d'un support ; ledit groupe étant un groupe trihalogénosilane ; un groupe trihydrogénosilane ; un groupe trialcoxysilane -Si(OR⁴)₃ avec R⁴ représentant un groupe alkyle saturé en C₁ à C₆, linéaire ou ramifié ou un groupe phényle ; un groupe triaminoalcoxyamine -Si(NR⁵R⁶)₃, avec les R⁵ et R⁶ représentant indépendamment un groupe alkyle saturé en C₁ à C₆, linéaire ou ramifié où un groupe phényle ; ou un groupe organométallique ;
- E représente un groupe alkylène comprenant de 8 à 24 atomes de carbone ;
- A représente -O-.

2. Composé selon la revendication 1 répondant à la formule (III) suivante :

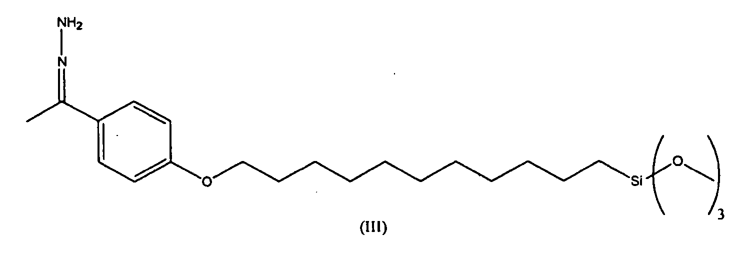

3. Composé selon la revendication 1, répondant à la formule (V) suivante :

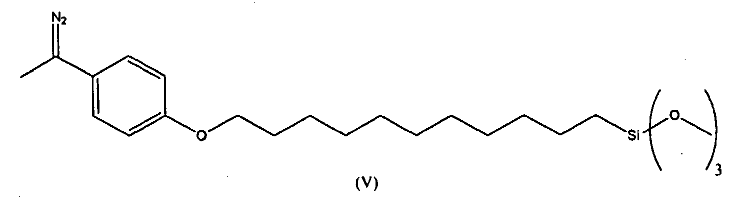

4. Procédé de fonctionnalisation d'un support solide comportant en surface des fonctions hydroxyle ou hydrure, ledit procédé comprenant une étape de mise en contact avec ledit support d'une solution comprenant au moins un composé silane tel que défini selon l'une quelconque des revendications 1 à 3.

5. Procédé selon la revendication 4, comprenant, avant l'étape de mise en contact, un étape de traitement de la surface du support afin de créer sur ladite surface les fonctions hydroxyles ou hydrures nécessaires au greffage.

6. Procédé selon la revendication 4 ou 5, dans lequel le support solide est un support organique ou un support inorganique.

7. Procédé selon la revendication 6, dans lequel le support inorganique est en oxyde métallique, en métal ou en silicium.

8. Support solide susceptible d'être obtenu par le procédé tel que défini selon l'une quelconque des revendications 4 à 7.

9. Procédé d'immobilisation de molécules biologiques sur un support solide comprenant successivement :
a) une étape de mise en oeuvre du procédé tel que défini selon l'une quelconque des revendications 4 à 7 ;
b) une étape de mise en contact du support obtenu à l'étape a) avec une solution comprenant la (les) molécule(s) biologique(s) à immobiliser.

10. Procédé d'immobilisation selon la revendication 9, dans lequel la molécule biologique à immobiliser est choisie parmi les acides nucléiques, les polypeptides, les lipides, les carbohydrates ou les hormones.

11. Procédé d'immobilisation selon la revendication 9, dans lequel la molécule biologique à immobiliser est l'acide nucléique.

12. Support solide susceptible d'être obtenu par un procédé tel que défini selon l'une quelconque des revendications 9 à 11.

13. Support solide selon la revendication 12, dans lequel les molécules biologiques immobilisées sont des acides nucléiques ou des polypeptides et qu'il constitue une puce à acides nucléiques ou à polypeptides.

## Claims

1. Silane compound corresponding to either of the following formulae: 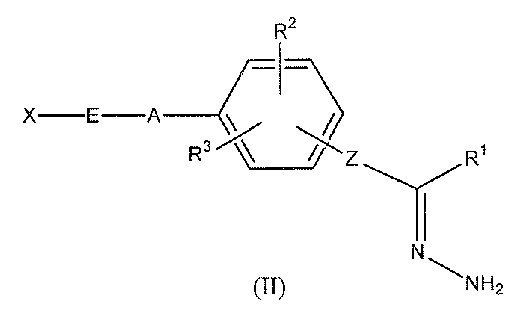 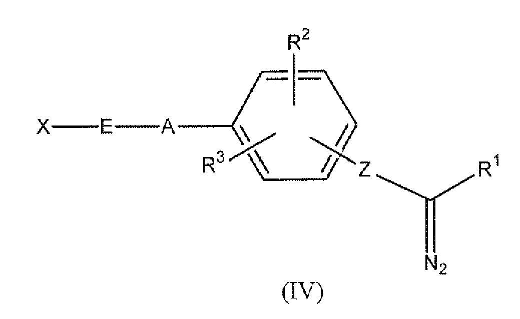 in which:
- R¹ represents a hydrogen atom, an alkyl group or an aryl group;
- R² and R³ represent, independently of one another, H, NO₂, Cl, Br, F, I, OR, SR, NR₂, R, NHCOR, CONHR or COOR, with R representing an alkyl or aryl group;
- Z represents a simple bond;
- X represents a silyl group capable of creating a covalent bond after reaction with the hydroxyl or hydride functional groups of a support, said group being a trihalosilane group; a trihydrosilane group; a trialkoxysilane group -Si (OR⁴)₃, with R⁴ representing a saturated, linear or branched, C₁ to C₆ alkyl group or a phenyl group; a triaminoalkoxyamine group -Si (NR⁵R³, with the R⁵ and R⁶ groups independently representing a saturated, linear or branched, C₁ to C₆ alkyl group or a phenyl group; or an organometallic group;
- E represents an alkylene group comprising from 8 to 24 carbon atoms;
- A represents -O-.

2. Compound according to Claim 1, corresponding to the following formula (III):

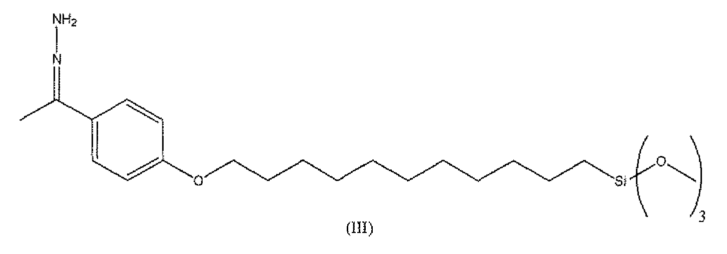

3. Compound according to Claim 1, corresponding to the following formula (V):

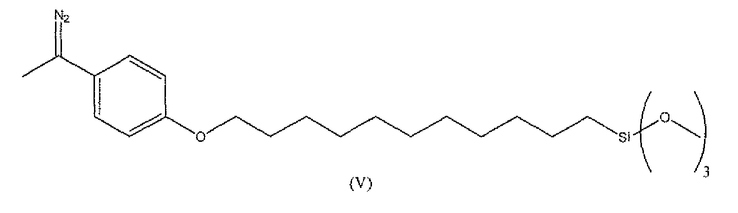

4. Process for the functionalization of a solid support comprising hydroxyl or hydride functional groups at the surface, the said process comprising a stage in which the said support is brought into contact with a solution comprising at least one silane compound as defined according to any one of Claims 1 to 3.

5. Process according to Claim 4, comprising, before the contacting stage, a stage of treatment of the surface of the support in order to create, on the said surface, the hydroxyl or hydride functional groups necessary for the grafting.

6. Process according to Claim 4 or 5, in which the solid support is an organic support or an inorganic support.

7. Process according to Claim 6, in which the inorganic support is made of metal oxide, of metal or of silicon.

8. Solid support capable of being obtained by the process as defined according to any one of Claims 4 to 7.

9. Method for the immobilization of biological molecules on a solid support, successively comprising:
a) a stage of implementing the process as defined according to any one of Claims 4 to 7;
b) a stage in which the support obtained in stage a) is brought into contact with a solution comprising the biological molecule(s) to be immobilized.

10. Immobilization method according to Claim 9, in which the biological molecule to be immobilized is chosen from nucleic acids, polypeptides, lipids, carbohydrates or hormones.

11. Immobilization method according to Claim 9, in which the biological molecule to be immobilized is nucleic acid.

12. Solid support capable of being obtained by a method as defined according to any one of Claims 9 to 11.

13. Solid support according to Claim 12, in which the immobilized biological molecules are nucleic acids or polypeptides and which constitutes a nucleic acid or polypeptide chip.

## Patentansprüche

1. Silanverbindung entsprechend einer der folgenden Formeln: 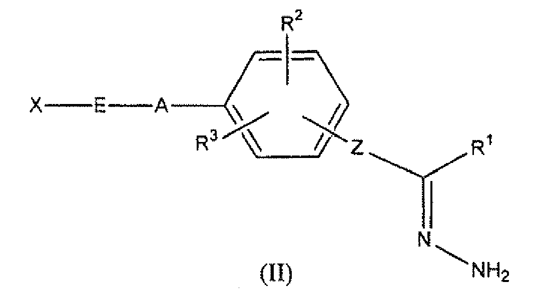 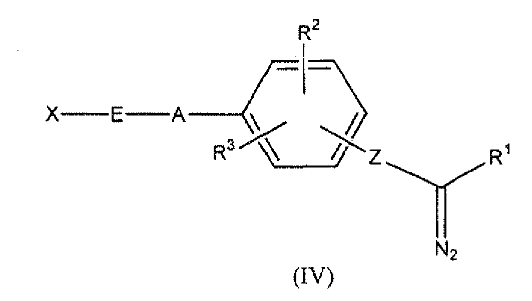 in denen:
- R¹ ein Wasserstoffatom, eine Alkylgruppe oder eine Arylgruppe darstellt;
- R² und R³ unabhängig voneinander H, NO₂, Cl, Br, F, I, OR, SR, NR₂, R, NHCOR, CONHR, COOR darstellen, wobei R eine Alkyl- oder Arylgruppe darstellt;
- Z eine Einfachbindung darstellt;
- X eine silylierte Gruppe darstellt, die geeignet ist, eine kovalente Bindung nach Reaktion mit den Hydroxyl- oder Hydridfunktionen eines Trägers herzustellen, wobei die Gruppe eine Trihalogensilangruppe ist, eine Trihydrogensilangruppe ist, eine Trialkoxysilangruppe -Si (OR⁴)₃ ist, wobei R⁴ eine an C₁ bis C₆ gesättigte lineare oder verzweigte Alkylgruppe oder eine Phenylgruppe ist, eine Triaminoalkoxyamingruppe -Si (NR⁵R⁶)₃ ist, wobei R⁵ und R⁶ unabhängig eine an C₁ bis C₆ gesättigte lineare oder verzweigte Alkylgruppe oder eine Phenylgruppe darstellen, oder eine organometallische Gruppe ist;
- E eine Alkylengruppe darstellt, die von 8 bis 24 Kohlenstoffatome enthält;
- A -O- darstellt.

2. Verbindung nach Anspruch 1 entsprechend der folgenden Formel (II):

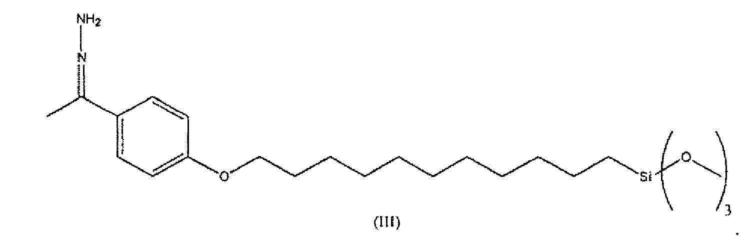

3. Verbindung nach Anspruch 1 entsprechend der folgenden Formel (V):

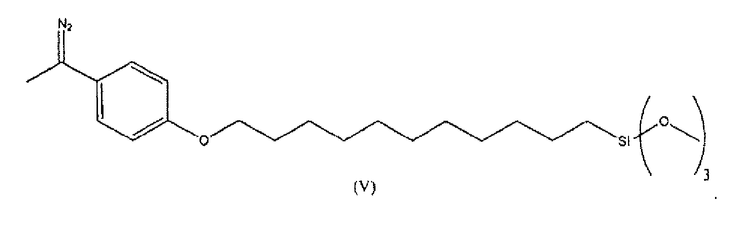

4. Verfahren zur Funktionalisierung eines festen Trägers, der an der Oberfläche Hydroxyl- oder Hydridfunktionen umfaßt, wobei das Verfahren einen Schritt des Inkontaktbringens einer Lösung, welche wenigstens eine Silanverbindung umfaßt, wie sie in einem der Ansprüche 1 bis 3 definiert ist, mit dem Träger umfaßt.

5. Verfahren nach Anspruch 4, umfassend, vor dem Schritt des Inkontaktbringens, einen Schritt der Behandlung der Oberfläche des Trägers, um auf der Oberfläche Hydroxyl- oder Hydridfunktionen zu erzeugen, die für ein Pfropfen erforderlich sind.

6. Verfahren nach Anspruch 4 oder 5, bei dem der feste Träger ein organischer Träger oder ein anorganischer Träger ist.

7. Verfahren nach Anspruch 6, bei dem der anorganische Träger aus metallischem Oxyd, aus Metall oder aus Silizium ist.

8. Fester Träger, der erhältlich ist durch das Verfahren, wie es in einem der Ansprüche 4 bis 7 definiert ist.

9. Verfahren zur Immobilisierung von biologischen Molekülen auf einem festen Träger, umfassend nacheinander:
a) einen Schritt der Ausführung des Verfahrens, wie es in einem der Ansprüche 4 bis 7 definiert ist;
b) einen Schritt des Inkontaktbringens des im Schritt a) erhaltenen Trägers mit einer Lösung, die das (die) zu immobilisierende(n) biologische(n) Molekül(e) enthält.

10. Verfahren zur Immobilisierung nach Anspruch 9, bei dem das zu immobilisierende biologische Molekül ausgewählt ist aus den Nukleinsäuren, den Polypeptiden, den Lipiden, den Kohlenhydraten oder den Hormonen.

11. Verfahren zur Immobilisierung nach Anspruch 9, bei dem das zu immobilisierende biologische Molekül Nukleinsäure ist.

12. Fester Träger, der erhältlich ist mittels eines Verfahrens, wie es in einem der Ansprüche 9 bis 11 definiert ist.

13. Fester Träger nach Anspruch 12, bei dem die immobilisierten biologischen Moleküle Nukleinsäuren oder Polypeptide sind und der einen Nukleinsäure- oder Polypeptid-Chip darstellt.
